Europäisches Patentamt

**European Patent Office**

Office européen des brevets

(11) Numéro de publication: **0 282 123 B1**

(12) **FASCICULE DE BREVET EUROPEEN**

(45) Date de publication de fascicule du brevet: **27.10.93** (51) Int. Cl.5: **G06F 12/14**, G07F 7/10

(21) Numéro de dépôt: **88200371.8**

(22) Date de dépôt: **29.02.88**

(54) **Système et procédé pour cryptographie avec application.**

(30) Priorité: **06.03.87 FR 8703083**

(43) Date de publication de la demande:
**14.09.88 Bulletin 88/37**

(45) Mention de la délivrance du brevet:
**27.10.93 Bulletin 93/43**

(84) Etats contractants désignés:
**CH DE FR GB IT LI NL SE**

(56) Documents cités:

**PATENT ABSTRACTS OF JAPAN, vol. 10, no. 251 (E-432)[2307], 28 août 1986; & JP-A-61 78 240 (NIPPON TELEGR & TELEPH. CORP.) 21-04-1986**

(73) Titulaire: **TRT TELECOMMUNICATIONS RADIOELECTRIOUES ET TELEPHONIOUES 88 rue Brillat Savarin F-75013 Paris(FR)**
(84) Etats contractants désignés:
**FR**

(73) Titulaire: **N.V. Philips' Gloeilampenfabrieken Groenewoudseweg 1 NL-5621 BA Eindhoven(NL)**
(84) Etats contractants désignés:

**CH DE GB IT LI NL SE**

(72) Inventeur: **Davio, Marc Société Civile S.P.I.D. 209, rue de l'Université F-75007 Paris(FR)**
Inventeur: **Gautier, Philippe Société Civile S.P.I.D. 209, rue de l'Université F-75007 Paris(FR)**
Inventeur: **Isphording, Willem Société Civile S.P.I.D. 209, rue de l'Université F-75007 Paris(FR)**
Inventeur: **Ouisquater, Jean-Jacques Société Civile S.P.I.D. 209, rue de l'Université F-75007 Paris(FR)**
Inventeur: **Sizabuire, Hervé Société Civile S.P.I.D. 209, rue de l'Université F-75007 Paris(FR)**

(74) Mandataire: **Charpail, François et al Société Civile S.P.I.D. 156, Boulevard Haussmann F-75008 Paris (FR)**

## Description

La présente invention a pour objet un système de cryptographie dans lequel des suites de données formées de "p" éléments binaires sont soumises à une permutation directe ou à son inverse.

La présente invention se rapporte également aux procédés de cryptographie et leur application.

Les systèmes de chiffrement (déchiffrement) sont utilisés pour assurer la sécurité de la mémorisation et/ou de la transmission d'informations devant rester confidentielles tant pour l'émetteur, le chiffreur, que pour le destinataire, le déchiffreur, le principe de la sécurité reposant sur le fait qu'une information chiffrée est, a priori, incompréhensible et inutilisable pour une personne non autorisée ne disposant pas de la clé.

La technique du chiffrement (déchiffrement) consiste à définir un processus algorithmique pour traiter les informations confidentielles ; compte tenu des moyens actuels de l'informatique, les processus connus et utilisés sont devenus de plus en plus complexes car, d'une part la rapidité de l'information permet un traitement autorisé de chiffrement (déchiffrement) plus complexe qu'avec d'autres moyens, d'autre part une personne non autorisée est susceptible d'utiliser l'informatique pour effectuer rapidement de multiples tentatives de décryptage dans le but de reconstituer en clair des informations chiffrées.

Un processus de cryptographie comportant au moins deux permutations inverses est décrit dans la publication "Advances in Cryptology, Proceedings of Crypto 83, Edited by David Chaum, University of California, Santa Barbara, California" notamment pages 171 à 202 "Analytical Characteristics of the DES" de Marc Davio et al.; cette publication est ici incluse par référence, un processus y est décrit p. 189 et suivantes; pour plus de connaissances en cryptographie, cette publication comporte aussi une large bibliographie p.199 à 202.

Dans un ordinateur un processus de cryptographie se matérialise par un programme dont l'exécution nécessite des ressources connues telles que le jeu d'instruction de l'ordinateur, des registres, la mémoire vive, la mémoire morte; ces ressources sont aussi utilisées par d'autres programmes, par exemple par les programmes qui utilisent, ou même qui créent, en clair, les informations confidentielles.

Du fait de la complexité des processus, les ressources informatiques nécessaires pour leur exécution sont devenues très importantes de telle sorte que, malgré toute l'attention qui a été apportée à cette question, certains ordinateurs, notamment les micro-ordinateurs, n'ont pas une capacité suffisante pour pouvoir y inclure un processus de chiffrement.

Un exemple typique de cette situation regrettable est la carte à mémoire; la carte à mémoire est aujourd'hui, avec son lecteur de carte à mémoire, un produit standardisé comportant un micro-ordinateur à capacité relativement limitée; pour les applications bancaires de la carte à mémoire il n'a pas encore été possible de réduire les ressources nécessaires pour le traitement d'un processus de chiffrement au point de pouvoir introduire celui-ci dans la mémoire de la carte; de ce fait, le chiffrement ne peut s'effectuer que dans le lecteur de carte à mémoire ce qui pose des problèmes de sésécurité lors de la transmission d'informations entre le lecteur et la carte elle-même.

La présente invention a pour but de supprimer cet inconvénient en réduisant considérablement les ressources informatiques nécessaires à l'exécution d'un processus de cryptographie de telle sorte que ledit processus peut être inclus dans un (micro) ordinateur de capacité limitée, et ceci sans pour autant pénaliser de manière sensible la durée de son exécution.

Selon la présente invention, un système de cryptographie est particulièrement remarquable en ce qu'il comprend une seule et unique table de permutation comportant au plus "p" positions de table donnant des valeurs indicatives pour déterminer l'emplacement de l'élément binaire dans la suite permutée, l'accès de ladite table étant codé en fonction de l'emplacement respectif de chacun des éléments binaires de la suite à permuter, et que :
- ladite table est découpée en "b" blocs numérotés contenant chacun "v" valeurs indicatives,
- chaque valeur indicative contient un indicateur de bloc pour définir un numéro de bloc, et un indicateur de position de destination pour définir directement un emplacement dans la suite permutée,

et en ce qu'il est prévu :
- des moyens de lecture de table pour permutation directe destinés à fournir l'indicateur de position de destination à partir d'une position d'entréé de table correspondant à l'emplacement de l'élément binaire dans la suite à permuter,
- des moyens de lecture de table pour permutation inverse pour fournir un numéro de bloc à partir d'une première position d'entrée de table correspondant à l'emplacement de l'élément binaire dans la suite à permuter,
- des moyens de traitement de bloc qui, en réponse audit numéro de bloc fourni par les moyens de lecture de table pour permutation inverse, déterminent une deuxième position d'entrée ayant pour indicateur de position de destination ladite première position d'entrée, contenu dans l'une des "v" valeurs indicatives du bloc indiqué par ledit numéro de bloc,
- des moyens de permutation commandés par l'indicateur de position de destination pour une permutation directe ou par la deuxième position d'entrée pour une permutation inverse pour déplacer chaque élément binaire de la suite à permuter afin de former la suite permutée.

Ainsi il est possible d'économiser l'emplacement mémoire normalement occupé par une des deux tables sans pour autant perdre l'information fournie puisque celle-ci peut être récupérée au moyen de l'indicateur de bloc ajouté dans la table unique.

Toutefois il faut éviter que l'indicateur de bloc ne provoque une augmentation sensible de la dimension de la table.

A cet effet, le système de cryptographie selon la présente invention, présentant une structure apte à traiter des mots de "y" éléments binaires et pour lequel les valeurs indicatives sont des mots de "x" éléments binaires, y et x étant tels que Ky - x = z où z et K sont des entiers, est particulièrement remarquable en ce que lesdits blocs portent un numéro compris entre "0" et "b-1" où "b" est au plus égal à $2^z$, c est-à-dire que b-1 $\leq 2^z$-1.

Ainsi, il est possible d'utiliser des positions de bits qui étaient précédemment inutilisées dans la table ; de ce fait l'occupation mémoire de la table peut ne pas augmenter du tout malgré la présence supplémentaire de l'indicateur de bloc.

Dans le cas particulier du processus de cryptographie connu sous le terme américain : "Data Encrypton Standart" tel que défini aux pages 183 et 184 de la publication déjà citée, les deux permutations IP et $IP^{-1}$ inverses l'une de l'autre sont regroupées l'une avec deux permutations $P^{-1}$, l'autre avec deux permutations P ; les permutations résultantes sont ci-après dénommées $IP.P^{-1}$ et $P.IP^{-1}$ ; elles s'appliquent à des informations comportant 64 données binaires à permuter c'est-à-dire 64 positions de table (p = 64) ; avec un ordinateur travaillant avec des mots binaires de 8 bits (y = 8), le système de cryptographie appliqué au processus DES est selon l'invention particulièrement remarquable en ce que ladite table ne comporte que 32 positions de table, chaque "$i^{ième}$"position de table comprenant un seul indicateur de bloc et un seul indicateur de destination, et en ce qu'il est prévu des moyens de traitement pour affecter un même indicateur de destination à un élément binaire situé à la "$i^{ième}$" position et à la "32 + $i^{ième}$" position et pour modifier ou non cet indicateur selon que l'emplacement est compris ou non entre 1 et 32.

Ainsi la seule table unique n'occupe que 32 octets de mémoire de programme ; ce résultat représente une économie de ressources infomatiques remarquable ; en effet l'encombrement mémoire a été divisé par 4 puisque dans l'art antérieur 2 tables de 64 octets chacune étaient nécessaires.

Comme il a été dit ci-dessus, les ressources informatiques se composent non seulement de mémoire de programme mais aussi du jeu d'instructions, de registres et de mémoire vive.

Pendant le traitement d'une permutation, les informations à traiter sont nécessairement mémorisées en mémoire vive ; dans l'état actuel de la technologie, par exemple dans le micro-ordinateur utilisé dans la carte à mémoire, la mémoire vive est très chère en ce sens qu'il faut à peu près 1.500 $\mu m^2$ de silicium par bit de mémoire vive, alors que seulement 110 $\mu m^2$ de silicium suffisent par bit de mémoire morte ; il est donc important de chercher à économiser les bits de mémoires vives.

Selon l'invention, le procédé de permutation mis en oeuvre dans un processeur dont l'accumulateur comporte "y" bits, pour permutation une première suite de "p" bits et ainsi obtenir comme résultat de la permutation une deuxième suite de "p" bits, la permutation étant définie par une table de consigne comportant "p" valeurs indicatives Vi où i : 1 $\leq$ i $\leq$ p, chaque "$i^{ième}$" valeur Vi indiquant quelle est la position de destination dans la deuxième suite du "$i^{ième}$" bit de la première suite, la permutation ainsi définie comportant au moins un cycle de "c", où c : 1 $\leq$ c $\leq$ p, valeurs Vi qui bouclent sur elle-mêmes, un point d'entrée étant choisi arbitrairement pour chaque cycle parmi les "c" couples de valeurs Vi qui le composent, la première suite de bits étant considérée comme composée de "m", où m est un entier positif, mots $M_m$ de "y" bits où p = y.[m-1] + r, avec 0 < r $\leq$ y, et est caractérisé en ce que il comporte, pour chaque cycle, les étapes suivantes :

a) mémorisation dans un registre de mémoire de la valeur et transfert en position de report ou carry du "$i^{ième}$", bit de la première suite déterminé par la valeur "i" du point d'entrée,

b) chargement dans l'accumulateur du mot $M_m$ de la première suite qui contient le bit défini par le contenu du registre de mémoire,

c) rotation sur lui-même de l'accumulateur selon un nombre de positions de bit tel que le bit défini par le contenu du registre de mémoire est amené en limite de mot,

d) rotation avec report de l'accumulateur selon une seule position de bit et dans un sens tel que d'une part le bit précédemment placé en limite de mot est maintenant placé dans le report, d'autre part, le bit précédemment placé dans le report vient s'insérer dans l'accumulateur,

e) rotation sur lui-même de l'accumulateur selon un nombre de positions de bit tel que chaque bit retrouve sa place initiale à l'exception de celui qui est maintenant en position de report,

f) déchargement de l'accumulateur pour remettre à sa place dans la première suite de bits le mot $M_m$ préalablementprélevé à l'étape b),

g) recherche dans la table de consigne de celle des valeurs Vi dont la position i est définie par le contenu dudit registre de mémoire, et mémorisation de la valeur trouvée dans ce même registre de mémoire,

h) comparaison du contenu du registre de mémoire avec la valeur "Vi" du point d'entrée du cycle pour, en cas d'inégalité poursuivre le traitement du cycle en retournant à l'étape b), et en cas d'égalité traiter les autres cycles jusqu'à l'accomplissement de la permutation complète.

Ainsi, la mise en oeuvre du procédé selon l'invention, lequel utilise d'une manière nouvelle le bit de report (carry) comme zone de mémoire temporaire de travail, permet de n'occuper qu'une seule zone de mémoire vive pour les deux suivantes de "p" bits avant et après permutation, puisque ladite deuxième suite vient bit après bit s'y substituer à ladite première suite lors de chaque échange de bit via le bit de report.

Subsidiairement on note que le procédé de permutation n'utilise pas les instructions classiques de manipulation de bit telles que : Test Bit, Set Bit, Reset Bit,...; ceci constitue un avantage supplémentaire car le jeu d'instruction de certains microprocesseurs ne comporte pas de telles instructions de manipulations de bits.

Dans le cas de DES, déjà cité, les informations à permuter comportant 8 octets (64 bits), le procédé selon l'invention permet donc d'économiser 8 octets de mémoire vive.

La mise en oeuvre de l'invention a finalement pour résultat technique une économie des ressources informatiques.

Ces caractéristiques permettent notamment l'application de DES dans la carte à mémoire elle-même et non plus dans le lecteur de carte à mémoire.

De ce fait, dans un système de communication comportant un ordinateur central, un réseau de transmission et des lecteurs de cartes à mémoire, chaque lecteur de carte devient plus simple à fabriquer car, à la limite, chaque lecteur de carte n'a plus à assurer qu'une simple fonction de boîte aux lettres.

La présente invention sera mieux comprise à l'aide d'un exemple, non limitatif, de réalisation ci-après décrit avec référence aux figures suivantes :

La figure 1 montre schématiquement les affectations fonctionnelles des $mm^2$ de la surface d'un microprocesseur mono-puce existant dans le commerce (Référence ET 1002 de la Société Thomson).

La figure 2 représente un schéma simplifié de DES.

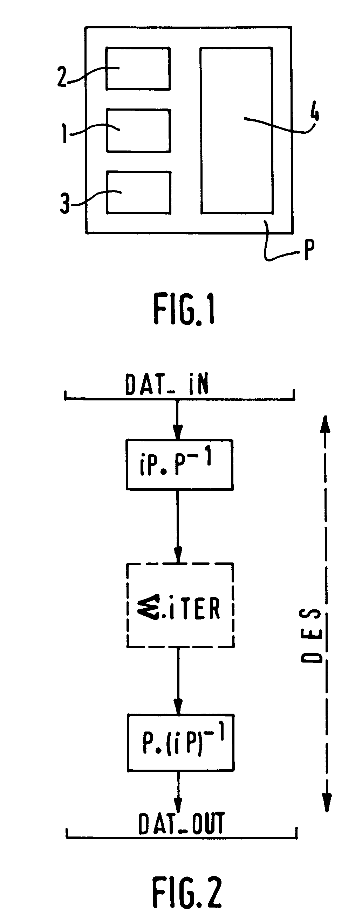

Sur la figure 1 est représentée schématiquement une puce P; sa surface totale est par exemple de 25 $mm^2$ qui sont affectés à quatre zones : zone 1 l'unité de traitement (CPU) qui occupe un sixième de la surface, zone 2 la mémoire vive (RAM) qui occupe un sixième de la surface, zone 3 la mémoire morte (ROM) qui occupe un sixième de la surface, zone 4 la mémoire de stockage de type EPROM qui occupe la moitié de la surface; les diverses zones sont reliées par des bus et des lignes de commande non représentés.

La zone 2 a une capacité de 44 octets.

La zone 3 a une capacité de 2K octets.

La zone 4 a une capacité de 1K octets.

Cette figure 1 montre combien la mémoire vive (RAM) est chère à réaliser techniquement puisque, si l'on raisonne en octet de mémoire, on utilise un cinquième (soit 20%) de la surface affectée à la mémoire pour ne réaliser que

$$1,4\% \ (= \frac{44}{44+2K+1K} )$$

de la mémoire.

Le schéma représenté sur la figure 1 correspond à celui de la puce référencée 'ET 1002' fabriquée et vendue par la Société Thomson. La zone 3 de mémoire morte contient les instructions d'un programme exécutable que l'acheteur doit fournir à l'avance en vue de la réalisation des masques de fabrication ainsi personnalisés.

L'ensemble final constitué par la puce munie de son programme constitue une machine informatique dont les performances techniques varient donc d'un acheteur à l'autre.

Toute réduction du nombre des octets de mémoire vive utilisés par un processus de traitement apporte donc des avantages techniques importants.

De même toute réduction du nombre des octets de mémoire morte utilisés pour mémoriser les instructions d'un processus de traitement apporte des avantages techniques importants.

Pour une utilisation bancaire avec carte à mémoire, la zone 4 (EPROM) est notamment utilisée pour stocker les transactions au fur et à mesure que l'usager utilise sa carte pour effectuer, par exemple, des achats chez les commerçants habilités, des virements, etc...

Dans les machines de chiffrement connues, un processus de cryptographie tel que DES dont les données à crypter comportent 64 bits, la première et la deuxième suites avant et après permutation occupent déjà à elles seules 16 octets de mémoire vive; en n'oubliant pas qu'il faut aussi une clé de chiffrement de 8 octets, 24 octets de mémoire vive sont ainsi déjà occupés avant d'avoir commencé le traitement; le traitement lui-même nécessite pour sa mémorisation (instruction + tables +...) quelques 1,5K octets de mémoire morte; ces quelques données numériques expliquent qu'à ce jour il n'a été possible d'implémenter DES que dans le terminal d'accès à la carte et non pas dans la carte elle-même.

De ce fait les échanges d'informations entre la carte et le terminal ne peuvent pas bénéficier de la sécurité apportée par le chiffrement.

La figure 2 représente succinctement le processus de DES tel que défini à la page 183 de la publication déjà citée.

Les informations à traiter en entrée DAT-IN subissent une première permutation IP.P$^{-1}$; elles sont ensuite manipulées par un traitement itératif $\Sigma$.ITER avant d'être à nouveau permutées P.IP$^{-1}$ pour fournir les données de sortie DAT-OUT.

Dans un processus réversible, il est clair que ces deux permutations sont l'inverse l'une de l'autre en ce sens que si la première permutation transporte le bit n°i à la position n°j, alors la deuxième permutation transporte (ou mieux 'remet') le bit n°j à la position n°i; considérons la table P.IP$^{-1}$; pour des raisons qui vont apparaître ci-après, il est avantageux de coder chaque numéro de bit, ou valeur indicative, sous la forme : numéro de l'octet + numéro du bit dans l'octet; il en résulte la table de définition de la permutation ci-dessous :

|  Bit |  | | | | ↓ | | | |
| --- | --- | --- | --- | --- | --- | --- | --- | --- |
| Octet | 0 | 1 | 2 | 3 | 4 | 5 | 6 | 7 |
| 0 | 73 | 75 | 15 | 17 | 33 | 47 | 61 | 65 |
| 1 | 05 | 03 | 27 | 21 | 67 | 45 | 63 | 71 |
| Table 1  → 2 | 01 | 23 | 77 | 51 | 41 | 37 | 53 | 55 |
| 3 | 07 | 43 | 25 | 11 | 31 | 57 | 13 | 35 |
| 4 | 72 | 74 | 14 | 16 | 32 | 46 | 60 | 64 |
| 5 | 04 | 02 | 26 | 20 | 66 | 44 | 62 | 70 |
| 6 | 00 | 22 | 76 | 50 | 40 | 36 | 52 | 54 |
| 7 | 06 | 42 | 24 | 10 | 30 | 56 | 12 | 34 |

Les 64 valeurs indicatives de la table sont rangées de gauche à droite et de haut en bas dans l'ordre des positions de bit avant permutation; chaque valeur comporte le numéro de l'octet et le numéro du bit destinataire; par exemple, le bit (2,4) situé, avant permutation, en bit numéro 4 de l'octet numéro 2 (voir les deux flèches) correspond à la valeur (4,1) de la table (valeur soulignée) ce qui signifie qu'après permutation le bit considéré sera placé dans l'octet numéro 4 en bit numéro 1.

On vérifie sur cette table que la valeur maximum est (7,7) ce qui correspond bien au dernier des 64 bits permutés lequel est bien le bit numéro 7 de l'octet numéro 7; on constate aussi que cette table comporte deux cycles.

Cette table P.IP$^{-1}$ ainsi représentée présente deux qualités tout à fait remarquables; en effet, on constate, d'une part que les valeurs de destination de chaque bit des 32 premiers bits de la zone à permuter sont toutes des valeurs impaires -pour les 32 derniers bits les valeurs sont donc nécessairement des valeurs paires-, d'autre part que les valeurs paires et impaires sont, après une translation de 4 octets vers le bas, égales entre elles à 1 près; par exemple la valeur de destination (7,3) du bit (0,0) est égale, à 1 près, à la valeur de destination (7,2) (située quatre octets plus bas) du bit (4,0) (bit numéro 0 de l'octet numéro 4) et ainsi de suite.

Selon l'invention le nombre de valeurs de la table est alors divisé par 2 ce qui réduit de moitié l'occupation mémoire de la table.

En ne gardant, par exemple, que les 32 valeurs impaires, la permutation entière peut encore être traitée; en effet pour chercher la position de destination d'un bit dont l'emplacement initial est égal ou supérieur à (4,0), il convient de soustraire (4,0) de cette adresse d'emplacement, de trouver dans la demie table conservée la valeur correspondante, et d'y soustraire la valeur 1 pour trouver la destination correcte normalement située dans la demie table absente; exemple : pour trouver la destination du bit (5,2), en soustrayant (4,0) on obtient (1,2) (bit 2 de l'octet 1) d'où la valeur (2,7) de la table à laquelle on soustrait 1 pour trouver (2,6) qui est bien la destination du bit (5,2) (bit 2 de l'octet 5). Le nombre de valeurs de la table peut donc bien être divisé par 2 sans perte d'information.

Les 32 valeurs restantes étant toutes des valeurs de même parité (paire ou impaire selon la moitié de table choisie), le dernier bit de chaque valeur n'est pas significatif et, dans un mode de réalisation préféré, il peut donc être ignoré; on constate alors que, pour chacune des 32 valeurs restantes, seulement cinq bits sont significatifs : 3 bits pour numéroter de 0 à 7 les 8 octets de destination, et 2 bits pour les numéros de bits sans le bit de parité.

On sait, comme susdit, que les deux permutations $IP.P^{-1}$ et $P.IP^{-1}$ de DES sont l'inverse l'une de l'autre; pour définir et donc effectuer réellement ces deux permutations, deux tables sont généralement proposées et utilisées dans les DES connus; toutefois une seule des deux tables est théoriquement suffisante; en effet, d'une part la dite table unique est utilisable de manière connue dans le sens "aller" et, d'autre part pour le sens "retour", c'est à dire l'autre permutation, il est possible d'effectuer une recherche dans la dite table unique pour trouver quelle est la position 'i' d'où est venu le bit 'j' ce qui permet de remettre le bit 'j' à sa place; l'inconvénient de n'utiliser qu'une seule table est que la dite recherche dans la table est effectuée séquentiellement par le programme de permutation; de ce fait, chaque recherche aura une durée moyenne correspondant à la durée du balayage séquentiel de la moitié de la table ce qui est très long avec les tables connues comportant 64 valeurs.

La réduction de la table à 32 valeurs, comme susdit, permet déjà de "réhabiliter" la recherche séquentielle mais la vitesse atteinte n'est pas encore suffisante.

Selon l'invention, la table est considérée comme constituée de 'b' blocs numérotés individuellement, et un indicateur de retour 'p' est associé à chaque 'j' ième valeur de la table pour indiquer le numéro de celui des blocs de la table qui contient la valeur 'j' de telle sorte que le temps de recherche moyen est divisé par 'b' puisque chaque bloc ne contient alors qu'un nombre de positions égal au nombre de positions de la table divisé par 'b'.

Prenons un exemple en divisant arbitrairement la table 1 ci-dessus en 4 blocs de 16 valeurs chacun (n = 4) le bloc 1 contient les valeurs relatives aux octets 0 et 1, le bloc 2 aux octets 2 et 3, etc...; de part la table 1, on sait que, à l'aller, le bit (2,4) (octet 2, bit 4, bloc 2) se trouvera en position (4,1) après permutation; en position (4,1) on trouve la valeur (7,4); pour le retour, le problème est donc, connaissant le bit qui est à la position (4,1), de trouver la position de la table qui pointe sur cette valeur (4,1); pour indiquer que cette valeur se trouve dans le 2ième bloc, on associe un indicateur de bloc de retour (p = 2) à la valeur (7,4); la position de table devient donc (2,7,4) (bloc 2, octet 7, bit 4), la dite recherche séquentielle sera alors limitée aux 16 valeurs du 2ième bloc dans lequel la valeur (4,1) est située; la durée moyenne de la recherche sera donc d'un demi-bloc, soit 8 valeurs.

Selon un mode préféré de réalisation de l'invention, la table est considérée comme constituée de 8 blocs (n = 8); dans le cas de la demie-table déjà décrite, chaque bloc ne comporte donc plus que 4 valeurs de sorte que la durée moyenne de la recherche est maintenant de 2 valeurs ce qui est évidemment très rapide; le choix de n = 8 présente en outre l'avantage de ne pas augmenter l'encombrement mémoire de la demie-table; en effet, comme susdit, chaque valeur de la demie-table ne comportait que cinq bits significatifs ce qui laisse, dans un octet de mémoire, 3 bits libres pour y mettre l'indicateur de bloc de retour.

Ainsi chacune des 32 positions de table comporte, selon l'invention, 8 bits dont : 3 bits pour l'indicateur de bloc de retour, et 5 bits (3 pour le numéro de l'octet et 2 pour le numéro du bit) pour l'emplacement de destination.

En se référant à la situation connue qui comportait 2 tables de 64 octets chacune, on mesure le progrès technique obtenu grâce à l'invention selon laquelle une unique table de 32 octets est suffisante pour effectuer les deux permutations sans pénaliser les performances d'exécution de ces permutations; l'encombrement mémoire est divisé par 4.

A titre indicatif et non limitatif, voici une forme que peut prendre la demie-table selon l'invention :

```
                              ↓
        Bit |0 |1 |2 |3 |4 |5 |6 |7 |
     Octet--+--+--+--+--+--+--+--+--+
         0  |9D|5E|46|C7|CD|F3|18|1A|        .-------T-------.
            +--+--+--+--+--+--+--+--+        |   0   |   1   |
         1  |42|81|CB|48|FB|32|F9|BC|        +-------+-------+
            +--+--+--+--+--+--+--+--+        |   2   |   3   |
      → 2   |AQ|C9|7F|34|90|AF|B5|F6|        +-------+-------+
            +--+--+--+--+--+--+--+--+        |   4   |   5   |
         3  |23|71|2A|64|6C|17|05|8E|        +-------+-------+
            +--+--+--+--+--+--+--+--+        |   6   |   7   |
                                            '-------+-------'
                 (a)                              (b)
```

## Table 2

La table 2a est représentée avec ses valeurs hexadécimales réelles; le tableau 2b indique les numéros des 8 blocs de la table 2a.

Le bloc 0 contient les 4 valeurs '9D', '5E', '46', 'C7';la première valeur '9D' = 10011101, dont les huit bits sont numérotés de 0 à 7 de gauche à droite, signifie :

bits 0 à 2 = '100' Numéro du bloc de retour,

bits 3 à 5 = '111' Numéro de l'octet de destination

bits 6 et 7 = '01' Numéro (sans parité) du bit de destination.

Les indications de cette table sont à utiliser de la manière suivante :

a) Pour la permutation 'aller' :

les bits de départ distants de (4,0) correspondent, comme susdit, à la même valeur de la table 2; exemple: les bits (6,4) et (2,4) donnent la valeur '90' de la table soit '1001 0000'; on en tire l'emplacement de destination :

bits 3 à 5 = 100, soit l'octet 4

bit 6 et 7 = 00, soit, en ajoutant le bit de parité convenable (0 pour (6,4), 1 pour (2,4)), le bit 000 et le bit 001, on retrouve bien les valeurs (4,0) et (4,1) de la table 1.

b) Pour la permutation 'retour' :

les bits qui doivent aller aux positions 2i et 2i-1 proviennent nécessairement, au vu de la table 1, de deux emplacements distants de 4 octets; pour 2 bits voisins, l'adresse de retour est donc la même, à 4 octets près; le numéro de bloc de retour commun à ces deux bits voisins ne doit évidemment occuper qu'un seul emplacement dans la table 2; de plus l'adresse de cet emplacement doit être facilement trouvée à partir de l'adresse des 2 bits voisins.

Un mode préférentiel de réalisation est celui de la table 2 :

soit à trouver l'adresse de retour des bits (7,2) et (7,3); sur 2 fois 3 bits on a

(7,2) = 111010

(7,3) = 111011


- avec les deux premiers bits on a la même valeur '11' soit 3 en décimal

- avec les trois bits suivants on a la même valeur '101' soit 5 en décimal

il est convenu que l'adresse recherchée est (3,5) (octet 3, bit 5); à cette adresse, dans la table 2, on trouve '17' soit = 0001 0111 ce qui fournit avec les trois premiers bits comme susdit, le numéro du bloc recherché soit '000'.

Le bloc n°0 de la table 2 contient quatre valeurs: '9D' '5E' '46' 'C7'.

Etant donné que la table 2 'ignore' les bits de parité comme susdit, il convient de chercher laquelle de ces quatre valeurs pointe vers le bit (7,1) (= 111 01, valeur obtenue à partir de (7,2) et/ou (7,3) en enlevant le bit de poids faible); la première valeur '9D' = 100 [11101] est celle dans laquelle les cinq bits de droite ont bien la valeur (7,1) ce qui n'est d'ailleurs pas le cas pour les autres valeurs:

5E = 010[1 1110], 46 = 010[0 0110], C7 = 110[0 0111];

'9D' étant à l'emplacement (0,0) les deux valeurs recherchées sont donc (0,0) et (4,0) = (0,0) + (4,0) ce qui correspond bien aux valeurs de la table 1 dans laquelle (4,0) pointe sur (7,2), et (0,0) pointe sur (7,3).

Le tableau 3 montre le processus de permutation qui selon l'invention résulte notamment en une réduction de la taille de la mémoire vive nécessaire au traitement de la permutation.

## TABLEAU 3

| | | 1 | 2 | 3 | 4 | 5 | 6 | |
|---|---|---|---|---|---|---|---|---|
| | BN | 1 | 2 | 3 | 4 | 5 | 6 | |
| **3a** | ZE | a | b | c | d | e | f | |
| | TA C(i,j) | 3 | 6 | 5 | 1 | 2 | 4 | |
| | ZS | d | e | a | f | c | b | |
| | 3b1 | a | b | c | d | e | f | RE=c |
| **3b** | 3b2 | e | f | a | b | c | d | RE=c |
| | 3b3 | f | a | b | c | d | c | RE=e |
| | 3b4 | a | b | c | d | c | f | RE=e |
| | 3b5 | a | e | c | d | c | f | RE=b |
| **3c** | TAB | 4 | 6 | 5 | 1 | 2 | 3 | |

Le tableau 3a définit une permutation qui opère sur une zone d'entrée (ZE) de 6 bits pour aboutir à une zone de sortie (ZS) de 6 bits permutés selon la table de définition (TA) de valeurs C(i,j); le nombre 6 n'est pas limitatif et il est clair que le procédé s'applique quel que soit le nombre de bits à permuter; les 6 bits sont, par commodité, numérotés (BN) de 1 à 6 ainsi que les valeurs de la table; également par commodité, les bits de la zone d'entrée sont dénommés a,b,c, d,e,f, pour faciliter la compréhension des étapes successives du processus de permutation; la table de définition comporte 6 valeurs indicatives (3,6,5,1,2,4); chacune des valeurs de la table, par exemple la troisième valeur ici égale à 5 (i = 3, j = 5) indique que le troisième bit de la zone d'entrée ZE ('c') doit se trouver, après permutation, à la position 5 de la zone de sortie; dans cet exemple, la table ne comporte que les six valeurs de 'j' qui sont rangées dans le bon ordre des 'i' croissants, cette disposition est équivalente à une table de couples C(i,j) de valeurs bi-univoques en i et j.

Pour réaliser une telle permutation un processus selon l'invention est explicité au tableau 3b; ce processus utilise la même zone de mémoire vive pour l'entrée et la sortie.

En choisissant arbitrairement un bit de départ, par exemple le troisième de la zone d'entrée soit 'c', ce bit est initialement mis dans la position RE de report (carry) ainsi que représenté en 3b1; la table indique que ce bit 'c' doit aller en position 5 là où se trouve actuellement le bit 'e' qui doit lui-même aller en position 2; la première étape est une rotation des bits sur eux-mêmes pour amener le bit 'e' en limite gauche de mot ainsi que représenté en 3b2, la valeur du bit de report n'ayant pas changé.

La deuxième étape est une rotation à gauche à travers le report de 1 position pour amener le bit 'e' dans le report et simultanément le bit de report 'c' en limite de mot, ainsi que représenté en 3b3; la troisième étape est une rotation des bits sur eux-mêmes pour les ramener à leur position initiale représentée en 3b4; à l'issue de cette première itération, le bit 'c' préalablement mis en position de report a trouvé sa place définitive, et le bit 'e' est maintenant en position de report; il est clair que ce processus est itératif; en se basant maintenant sur la cinquième valeur de la table TA(j = 2) qui concerne le bit 'e', le même processus va permuter 'e' et 'b' pour obtenir la position représentée en 3b5 dans laquelle le bit 'e' a aussi trouvé sa position définitive alors que maintenant c'est le bit 'b' qui est en position de report.

Le processus décrit a débuté par une rotation à gauche de 4 positions mais une rotation à droite de 1 position aurait permis d'aboutir au même résultat sous réserve d'adapter en conséquence le sens et le nombre de positions des rotations suivantes; une rotation à droite de 2 positions aboutissait aussi à la position représentée en 3b2; ces variantes ne sortent pas du cadre de la présente invention.

Avec les micro-ordinateurs connus travaillant sur 8 bits, il est nécessaire de transférer (code opération = Load) l'octet sur lequel on travaille dans l'accumulateur comme susdit; les codes opérations utilisés pour la mise en oeuvre du processus sont par exemple : Rotate right/left; Rotate with carry right/left selon le jeu d'instruction disponible.

En observant la table (TA) de l'exemple décrit, on constate que le processus itératif comporte un seul cycle à savoir : (3,5), (5,2), (2,6), (6,4), (4,1), (1,3). Après 6 itérations on retombe sur le bit n° 3 et la permutation est terminée; ceci démontre que le point d'entrée peut être choisi arbitrairement.

Avec une table différente, par exemple la table TAB du tableau 3c, on constate l'existence d'un premier cycle à savoir: (3,5), (5,2), (2,6), (6,3) et d'un deuxième cycle (1,4), (4,1); la présente invention s'applique quel que soit le nombre de cycles, étant entendu que ce nombre de cycles se déduit aisément d'une simple observation de la table, laquelle est nécessairement connue puisqu'elle est propre à l'algorithme de chiffrement; pour réaliser une permutation complète il suffit évidemment de définir un point d'entrée pour chaque cycle et d'exécuter autant de cycles et d'itérations que nécessaire; la fin de chaque cycle est reconnue lorsque le bit du point d'entrée de ce cycle est à nouveau rencontré.

Pour avoir plus d'indications sur la notion de cycle, on peut se reporter à la publication déjà citée (Davio) page 190, dernier paragraphe n° 3.

Ce processus de permutation des bits de la zone d'entrée sur elle-même a pour résultat technique que la zone de sortie est superposée à la zone d'entrée; dans le cas particulier de DES dans lequel la zone à permuter comporte 64 bits, il est très avantageux de libérer ainsi 64 bits de mémoire vive.

Le processus de permutation bit à bit est avantageusement mis en oeuvre dans DES simultanément avec la table unique à 32 positions de table -au lieu de 64- comportant des indicateurs de bloc, pour traiter $IP.P^{-1}$ et $P.IP^{-1}$.

Cette mise en oeuvre préférentielle résulte finalement en ce que les ressources informatiques, nécessaires à la mise en oeuvre d'un DES bénéficiant de l'invention décrite, sont réduites à 17 octets de mémoire vive et moins de 700 octets de mémoire de programme; ceci correspond à une économie de moyens matériels supérieure à 50%.

De ce fait, DES peut maintenant être implémenté dans des petits ordinateurs et notamment dans la carte à mémoire.

Ainsi la sécurité d'un système de transmission pour transactions bancaires n'est plus à la merci d'un fraudeur qui aurait accès aux informations en clair qui transiteraient entre la carte et le lecteur de carte.

## Revendications

1. Système de cryptographie dans lequel des suites de données formées de "p" éléments binaires sont soumises à une permutation directe ou à son inverse, système caractérisé en ce qu'il comprend une seule et unique table de permutation comportant au plus "p" positions de table donnant des valeurs indicatives pour déterminer l'emplacement de l'élément binaire dans la suite permutée, l'accès de ladite table étant codé en fonction de l'emplacement respectif de chacun des éléments binaires de la suite à permuter, et que :
   - ladite table est découpée en "b" blocs numérotés contenant chacun "v" valeurs indicatives,
   - chaque valeur indicative contient un indicateur de bloc pour définir un numéro de bloc, et un indicateur de position de destination pour définir directement un emplacement dans la suite permutée,
   et en ce qu'il est prévu :
   - des moyens de lecture de table pour permutation directe destinés à fournir l'indicateur de position de destination à partir d'une position d'entréé de table correspondant à l'emplacement de l'élément binaire dans la suite à permuter,
   - des moyens de lecture de table pour permutation inverse pour fournir un numéro de bloc à partir d'une première position d'entrée de table correspondant à l'emplacement de l'élément binaire dans la suite à permuter,

- des moyens de traitement de bloc qui, en réponse audit numéro de bloc fourni par les moyens de lecture de table pour permutation inverse, déterminent une deuxième position d'entrée ayant pour indicateur de position de destination ladite première position d'entrée, contenue dans l'une des "v" valeurs indicatives du bloc indiqué par ledit numéro de bloc,

- des moyens de permutation commandés par l'indicateur de position de destination pour une permutation directe ou par la deuxième position d'entrée pour une permutation inverse pour déplacer chaque élément binaire de la suite à permuter afin de former la suite permutée.

2. Système de cryptographie selon la revendication 1 présentant une structure apte à traiter des mots de "y" éléments binaires et pour lequel les valeurs indicatives sont des mots de "x" éléments binaires, y et x étant tels que : Ky - x = z où z et K sont des entiers, caractérisé en ce que lesdits blocs portent un numéro compris entre "0" et "b-1" où "b" est au plus égal à $2^z$, c'est-à-dire que b-1 $\leq$ $2^z$-1.

3. Système de cryptographie selon la revendication 2, le processus de chiffrement et/ou déchiffrement réversible comportant une permutation IP.P$^{-1}$ et son inverse P.IP$^{-1}$, les suites à permuter et les suites permutées comportant des éléments binaires disposés selon 64 emplacements, dans lequel "p" est donc égal à 64 et "y" à 8, caractérisé en ce que ladite table ne comporte que 32 positions de table, chaque "i$^{ième}$"position de table comprenant un seul indicateur de bloc et un seul indicateur de destination, et en ce qu'il est prévu des moyens de traitement pour affecter un même indicateur de destination à un élément binaire situé à la "i$^{ième}$" position et à la "32 + "i$^{ième}$" position et pour modifier ou non cet indicateur selon que l'emplacement est compris ou non entre 1 et 32.

4. Système de cryptographie selon la revendication 3, caractérisé en ce que chaque position de la table comporte 8 bits pour contenir d'une part sur 3 bits le numéro du bloc et d'autre part sur 5 bits l'indicateur de destination et que de ce fait b = 8, z = 3 et x = 5.

5. Procédé de cryptographie dans lequel des suites de données formées de "p" éléments binaires sont soumises à une permutation directe ou à son inverse, caractérisé en ce qu'il implique l'utilisation d'une seule et unique table de permutation comportant au plus "p" positions de table donnant des valeurs indicatives pour déterminer l'emplacement de l'élément binaire dans la suite permutée, l'accès de ladite table étant codé en fonction de l'emplacement respectif de chacun des éléments binaires de la suite à permuter, en outre la table étant découpée en "b" blocs numérotés contenant chacun "v" valeurs indicatives, chaque valeur indicative contenant un indicateur de bloc pour définir un numéro de bloc, et un indicateur de position de destination pour définir directement un emplacement dans la suite permutée, et en ce qu'il comporte les étapes suivantes :
   a) pour une permutation directe et pour chaque élément binaire de la suite à permuter :
   - lecture de la table pour obtenir l'indicateur de position de destination à partir d'une position d'entrée de table correspondant à l'emplacement de l'élément binaire dans la suite à permuter,
   - permutation proprement dite pour déplacer en fonction de l'indicateur de position de destination l'élément binaire de la suite à permuter pour former la suite permutée,
   b) pour une permutation inverse et pour chaque élément binaire de la suite à permuter :
   - lecture de la table pour obtenir le numéro de bloc,
   - analyse des indicateurs de position de destination contenus dans le bloc pour trouver la position d'entrée de l'indicateur de destination correspondant à l'emplacement de l'élément binaire de la suite à permuter,
   - permutation proprement dite pour déplacer, en fonction de ladite position d'entrée l'élément binaire de la suite à permuter pour former la suite permutée.

6. Procédé de cryptographie selon la revendication 5 mis en oeuvre dans un processeur dont l'accumulateur comporte "y" bits, pour permutation une première suite de "p" bits et ainsi obtenir comme résultat de la permutation une deuxième suite de "p" bits, la permutation étant définie par une table de consigne comportant "p" valeurs indicatives Vi où i : 1 $\leq$ i $\leq$ p, chaque "i$^{ième}$", valeur Vi indiquant quelle est la position de destination dans la deuxième suite du "i$^{ième}$" bit de la première suite, la permutation ainsi définie comportant au moins un cycle de "c", ou c : 1 $\leq$ c $\leq$ p, valeurs Vi qui bouclent sur elle-mêmes, un point d'entrée étant choisi arbitrairement pour chaque cycle parmi les c" couples de valeurs Vi qui le composent, la première suite de bits étant considérée comme composée de "m", où m est un entier positif, mots $M_m$ de "y" bits où p = y.[m-1] + r, avec 0 < r $\leq$ y, est caractérisé en ce que il comporte, pour chaque cycle, les étapes suivantes :

a) mémorisation dans un registre de mémoire de la valeur et transfert en position de report ou carry du "$i^{ième}$" bit de la première suite déterminé par la valeur "i" du point d'entrée,

b) chargement dans l'accumulateur du mot $M_m$ de la première suite qui contient le bit défini par le contenu du registre de mémoire,

c) rotation sur lui-même de l'accumulateur selon un nombre de positions de bit tel que le bit défini par le contenu du registre de mémoire est amené en limite de mot,

d) rotation avec report de l'accumulateur selon une seule position de bit et dans un sens tel que d'une part le bit précédemment placé en limite de mot est maintenant placé dans le report, d'autre part, le bit précédemment placé dans le report vient s'insérer dans l'accumulateur,

e) rotation sur lui-même de l'accumulateur selon un nombre de positions de bit tel que chaque bit retrouve sa place initiale à l'exception de celui qui est maintenant en position de report,

f) déchargement de l'accumulateur pour remettre à sa place dans la première suite de bits le mot $M_m$ préalablementprélevé à l'étape b),

g) recherche dans la table de consigne de celle des valeurs Vi dont la position i est définie par le contenu dudit registre de mémoire, et mémorisation de la valeur trouvée dans ce même registre de mémoire,

h) comparaison du contenu du registre de mémoire avec la valeur "Vi" du point d'entrée du cycle pour, en cas d'inégalité poursuivre le traitement du cycle en retournant à l'étape b), et en cas d'égalité traiter les autres cycles jusqu'à l'accomplissement de la permutation complète.

7. Application d'un système de cryptographie selon la revendication 1, 2, 3, 4 ou d'un procédé de cryptographie selon la revendication 6 dans une carte à mémoire pour chiffrer et/ou déchiffrer, au sein même de ladite carte, des informations échangées entre ladite carte à mémoire et un système de communication.

## Claims

1. A system for cryptography in which data sequences consisting of "p" bits are subjected to a direct or an inverse permutation, characterized in that it comprises a single and unique permutation table with at the most "p" table positions providing indicative values for determining the location of the bit in the permuted sequence, the access to said table being encoded as a function of the respective location of each of the bits of the sequence to be permuted, and that:
   - said table is divided into "b" numbered blocks, each of which contains "v" indicative values,
   - each indicative value contains a block indicator for defining a block number and a destination position indicator for directly defining a location in the permuted sequence, and in that there are provided:
   - table reading means for direct permutation which are intended to supply the destination position indicator on the basis of a table input position, corresponding to the location of the bit in the sequence to be permuted,
   - table reading means for inverse permutation which are intended to supply a block number on the basis of a first table input position, corresponding to the location of the bit in the sequence to be permuted,
   - block processing means which determine, in response to said block number supplied by the table reading means for inverse permutation, a second input position whose destination position indicator is formed by said first input position, contained in one of the "v" indicative values of the block indicated by said block number,
   - permutation means which are controlled by the destination position indicator for a direct permutation, or by the second input position for an inverse permutation, in order to shift each bit of the sequence to be permuted so as to form the permuted sequence.

2. A system for cryptography as claimed in Claim 1, having a structure suitable for processing words comprising "y" bits, for which the indicative values are words comprising "x" bits, y and x being such that Ky-x = z, where z and K are integers, characterized in that said blocks bear a number between "0" and "b-1", where "b" is at the most equal to $2^z$, i.e. $b-1 \leq 2^z-1$.

3. A system for cryptography as claimed in Claim 2, where the reversible encoding and/or decoding process includes a permutation IP.P$^{-1}$ and its inverse P.IP$^{-1}$, the sequences to be permuted and the

EP 0 282 123 B1

permuted sequences comprising bits arranged in 64 locations, "p" thus being equal to 64 and "y" being equal to 8, characterized in that said table comprises only 32 table positions, each "i"th table position comprising a single block indicator and a single destination indicator, and in that there are provided processing means for assigning the same destination indicator to a bit situated at the "i"th position and at the "32 + i"th" position, and for modifying this indicator or not, depending on whether or not the location is situated between 1 and 32.

4. A system for cryptography as claimed in Claim 3, characterized in that each table position comprises 8 bits so as to contain on the hand the block number in 3 bits and on the other hand the destination indicator in 5 bits, and that therefore b = 8, z = 3 and x = 5.

5. A method for cryptography in which data sequences consisting of "p" bits are subjected to a direct or an inverse permutation, characterized in that it implies the use of a single and unique permutation table with at the most "p" table positions providing indicative values for determining the location of the bit in the permuted sequence, the access to said table being encoded as a function of the respective location of each of the bits of the sequence to be permuted, said table, moreover, being divided into "b" numbered blocks, each of which contains "v" indicative values, each indicative value containing a block indicator for defining a block number and a destination position indicator for directly defining a location in the permuted sequence,
and in that it comprises the following steps:
a) for a direct permutation and for each bit of the sequence to be permuted:
- reading of the table so as to obtain the destination position indicator on the basis of a table input position corresponding to the location of the bit in the sequence to be permuted,
- actual permutation for shifting, as a function of the destination position indicator, the bit of the sequence to be permuted so as to form the permuted sequence,
b) for an inverse permutation and for each bit of the sequence to be permuted:
- reading of the table so as to obtain the block number,
- analysis of the destination position indicators contained in the block so as to find the input position of the destination indicator corresponding to the location of the bit of the sequence to be permuted,
- actual permutation for shifting, as a function of said input position, the bit of the sequence to be permuted so as to form the permuted sequence.

6. A method for cryptography as claimed in Claim 5, executed in a processor whose accumulator comprises "y" bits, for permuting a first sequence of "p" bits, thus obtaining a permutation result in the form of a second sequence of "p" bits, the permutation being defined by an instruction table comprising "p" indicative values Vi, where $1 \leq i \leq p$, each "i"th value Vi indicating the destination position in the second sequence of the "i"th bit of the first sequence, the permutation thus defined comprising at least one cycle of "c" values Vi, where $1 \leq c \leq p$, which are looped back to themselves, an input point being arbitrarily chosen for each cycle from the "c" constituent pairs of values Vi, the first bit sequence being considered as being composed of "m", where m is a positive integer, words $M_m$ of "y" bits, where $p = y.[m-1] + r$, with $0 \leq r \leq y$, characterized in that for each cycle it comprises the following steps:
a) storage in a memory register of the value and transfer to the carry position of the "i"th bit of the first sequence determined by the value i" of the input point,
b) loading into the accumulator of the word $M_m$ of the first sequence which contains the bit defined by the content of the memory register,
c) rotation of the accumulator within itself by a number of bit positions such that the bit defined by the content of the memory register is moved to the end of the word,
d) rotation with carry of the accumulator by a single bit position in a direction such that on the one hand the bit previously placed at the end of the word is now placed in the carry, and on the other hand the bit previously placed in the carry is entered into the accumulator,
e) rotation of the accumulator within itself by a number of bit positions such that each bit returns to its initial position with the exception of the bit which is now in the carry position,
f) unloading of the accumulator in order to return the word $M_m$ previously fetched in the step b) to its position in the first bit sequence,
g) searching, in the instruction table, for that value of Vi whose position is defined by the content of said memory register, and storage of the value found in this memory register,

12

h) comparison of the content of the memory register with the value "Vi" of the input point of the cycle in order to continue the processing of the cycle by returning to step b) in the case of inequality and, in the case of equality, to process the other cycles until completion of the permutation.

7. Application of a system for cryptography as claimed in Claim 1, 2, 3, 4, or of a method for cryptography as claimed in Claim 6, to a memory card for encoding and/or decoding, within the card itself, data exchanged between said memory card and a communication system.

**Patentansprüche**

1. Anordnung für Kryptographie, bei der aus "p" Bits bestehende Datenreihen einer direkten oder einer invertierten Permutation unterworfen werden. dadurch gekennzeichnet, daß die Anordnung eine einfache und einzigartige Permutationstabelle mit höchstens "p" Tabellenpositionen umfaßt, die indikative Werte zum Bestimmen des Ortes des Bits in der permutierten Reihe liefert, wobei der Zugriff zur genannten Tabelle abhängig vom jeweiligen Ort jedes Bits der zu permutierenden Reihe codiert ist, und daß:
   - die Tabelle in "b" numerierte Blöcke verteilt ist, die je "v" indikative Werte enthalten,
   - jeder Indikativwert einen Blockindikator zum Definieren einer Blocknummer sowie einen Bestimmungspositionsindikator zum unmittelbaren Definieren eines Orts in der permutierten Reihe enthält,
   und daß weitere Elemente vorgesehen sind:
   - Tabellenlesemittel für direkte Permutation, die zum Liefern des Bestimmungspositionsindikators auf der Basis einer Tabelleneingangsposition dienen, die dem Ort des Bits in der zu permutierenden Reihe entspricht,
   - Tabellenlesemittel für invertierte Permutation, die zum Liefern einer Blocknummer auf der Basis einer ersten Tabelleneingangsposition dienen, die dem Ort des Bits in der zu permutierenden Reihe entspricht,
   - Blockbearbeitungsmittel, die in Beantwortung der von den Tabellenlesemitteln für invertierte Permutation gelieferten Blocknummer eine zweite Eingangspsition bestimmen, deren Bestimmungspositionsindikator durch die erste Eingangsposition gebildet wird, die in einen der "v" Indikativwerte des von der genannten Blocknummer angezeigten Blocks aufgenommen wird,
   - Permutationsmittel, die bei einer direkten Permutation vom Bestimmungspositionsindikator oder bei invertierter Permutation von der zweiten Eingangsposition gesteuert werden, um jedes Bit der zu permutierenden Reihe zu verschieben und so die permutierte Reihe zu bilden.

2. Anordnung für Kryptographie nach Anspruch 1 mit einer Struktur, die sich zum Bearbeiten von Wörtern von "y" Bits eignet, für die die Indikativwerte aus Wörtern mit "x" Bits bestehen, wobei "y" und "x" derart sind, daß $Ky - x = z$ ist, wobei $z$ und $K$ ganze Zahlen sind, insbesondere dadurch gekennzeichnet, daß die Blöcke eine Nummer zwischen "0" und "b-1" führen, wobei "b" höchstens gleich $2^z$ ist, was bedeutet, daß $b-1 \leq 2^z-1$ ist.

3. Anordnung für Kryptographie nach Anspruch 2, wobei das umkehrbare Codier- und/oder Decodierverfahren eine Permutation $IP.P^{-1}$ und ihre invertierte Permutation $P.IP^{-1}$ enthält, wobei die zu permutierenden und die permutierten Bitreihen enthalten, die in 64 Stellen angebracht sind, wodurch $p$ gleich 67 und $y$ gleich 8 ist, dadurch gekennzeichnet, daß die Tabelle nur 32 Tabellenpositionen enthält, wobei jede i-te Tabellenposition einen einzigen Blockindikator und einen einzigen Bestimmungsblock enthält, und daß Bearbeitungsmittel zum Zuordnen desselben Bestimmungsindikators zu einem Bit in der i-ten Position und in der $32+i$-ten Position vorgesehen sind und zum Ändern dieses Indikators in Abhängigkeit davon, ob die Stelle möglicherweise zwischen 1 und 32 liegt.

4. Anordnung für Kryptographie nach Anspruch 3, dadurch gekennzeichnet, daß jede Tabellenposition 8 Bits enthält, so daß einerseits die Blocknummer 3 Bits und andererseits der Bestimmungsindikator 5 Bits umfassen, und daß deshalb $b = 8$, $z = 3$ und $x = 5$ betragen.

5. Verfahren für Kryptographie, bei dem aus $p$ Bits bestehende Datenreihen einer direkten oder invertierten Permutation unterworfen werden können, dadurch gekennzeichnet, daß eine einzige und einzigartige Permutationstabelle mit höchstens "p" Tabellenpositionen verwendet wird, die indikative Werte zum Bestimmen des Ortes des Bits in der permutierten Reihe liefern, wobei der Zugriff zur genannten Tabelle abhängig vom jeweiligen Ort jedes Bits der zu permutierenden Reihe codiert ist, die Tabelle außerdem in "b" numerierte Blöcke verteilt ist, die je "v" indikative Werte enthalten, jeder Indikativwert einen Blockindikator zum Definieren einer Blocknummer sowie einen Bestimmungspositionsindikator zum unmittelbaren Definieren eines Orts in der permutierten Reihe enthält, und daß weitere Schritte vorgesehen sind:

a) für eine direkte Permutation und für jedes Bit der zu permutierenden Reihe:
- das Lesen der Tabelle zum Erhalten des Bestimmungspositionsindikators auf der Basis einer Tabelleneingangsposition dienen, die dem Ort des Bits in der zu permutierenden Reihe entspricht,
- die eigentliche Permutation zum Verschieben des Bits der zu permutierenden Reihe abhängig vom Bestimmungspositionsindikators zur Bildung der permutierten Reihe,

b) für invertierte Permutation und für jedes Bit der zu permutierenden Reihe:
- das Lesen der Tabelle zum Erhalten der Blocknummer,
- das Analysieren des in den Block aufgenommenen Bestimmungspositionsindikators, um die Eingangsposition des Bestimmungsindikators zu finden, der dem Ort des Bits der zu permutierenden Reihe entspricht,
- die eigentliche Permutation zum Verschieben des Bits der zu permutierenden Reihe abhängig von der Eingangsposition, um die permutierte Reihe zu bilden.

6. Verfahren für Kryptographie nach Anspruch 5 bei der Durchführung in einem Prozessor, dessen Akkumulator "y" Bit zum Permutieren einer ersten Reihe von "p" Bits enthält, wodurch ein Permutationsergebnis in Form einer zweiten Reihe von "p" Bits erhalten wird, wobei die Permutation von einer Befehlstabelle mit "p" Indikativwerten Vi definiert wird, $1 \leq i \leq p$ ist und jeder i-te Wert Vi die Bestimmungsposition des i-ten Bits der ersten Reihe in der zweiten Reihe angibt, die auf diese Weise definierte Permutation wenigstens einen Zyklus von "c" nach sichselbst rückgekoppelten Werten Vi enthält, wobei $1 \leq c \leq p$ ist, für jeden Zyklus aus den "c" zusammenstellenden Paaren von Indikativwerten Vi beliebig ein Eingangspunkt gewählt wird, die erste Bitreihe aus "m" Wörtern $M_m$ von "y" Bits bestehend erachtet wird, worin m eine positive gerade Zahl ist, und p = y.[m-1] + r ist, worin $0 \leq r \leq y$ ist, dadurch gekennzeichnet, daß das Verfahren für jeden Zyklus folgende Schritte umfaßt:

a) das Speichern des Wertes in einem Speicherregister und das Übertragen des i-ten Bits der ersten Reihe auf die Übertragungsposition, die der Wert "i" des Eingangspunkts bestimmt,

b) das Laden des Wortes $M_m$ der ersten Reihe in den Akkumulator, die das vom Inhalt des Speicherregisters definierte Bit enthält,

c) Rotation im Akkumulator selbst über eine derartige Anzahl von Bitpositionen, daß das vom Inhalt des Speicherregisters definierte Bit nach dem Ende des Worts versetzt wird,

d) Rotation des Akkumulators mit Übertragung über eine einzige Bitposition in einer derartigen Richtung, daß einerseits das zuvor nach dem Ende des Worts versetzte Bit jetzt in die Übertragung gebracht ist und andererseits das zuvor in die Übertragung gebrachte Bit in den Akkumulator eingeführt wird,

e) Rotation im Akkumulator selbst über eine derartige Anzahl von Bitpositionen, daß jedes Bit nach seiner Ausgangsposition zurückkehrt mit Ausnahme des Bits, das sich jetzt in der Übertragungsposition befindet,

f) das Entladen des Akkumulators zum Zurücksenden des früher im ersten Schritt b) aufgerufenen Worts $M_m$ nach seiner Position in der ersten Bitreihe,

g) die Suche jenes Wertes von Vi in der Befehlstabelle, dessen Position i vom Inhalt des genannten Speicherregisters definiert wird, und das Speichern des in diesem Speicherregister gefundenen Werts,

h) das Vergleichen des Inhalts des Speicherregisters mit dem Wert "Vi" des Eingangspunkts des Zyklus zum Fortsetzen der Bearbeitung des Zyklus bei Nichtübereinstimmung durch Rückkehr nach dem Schritt b) und bei Übereinstimmung durch Verarbeitung der anderen Zyklen, bis die Permutation vervollständigt ist.

7. Anwendung einer Anordnung für Kryptographie nach Anspruch 1, 2, 3, 4, oder eines Verfahrens für Kryptographie nach Anspruch 6, auf einer Speicherkarte zum Codieren und/oder zum Decodieren von Daten in der Karte selbst,die zwischen der Speicherkarte und einer Kommunikationsanordnung ausgetauscht werden.

# FIG.1

# FIG.2